# DEMANDE DE BREVET EUROPEEN

(11) **EP 1 098 498 A1**
(43) Date de publication de la demande: **09.05.2001**
(21) Numéro de dépôt: 00203713.3
(22) Date de dépôt: 26.10.2000
(51) Int. Cl.: H04M 1/247, G06F 3/033

(54) **Appareil comportant un écran pour des images stéréoscopiques**

(30) Priorité: 04.11.1999 FR 9913828
(71) Demandeur: Koninklijke Philips Electronics N.V., 5621 BA Eindhoven (NL)
(72) Inventeur: Lambert, Thierry, 75008 Paris (FR)
(74) Mandataire: Chaffraix, Jean

(57) **Abrégé**

Cet appareil (1) portable du genre téléphone mobile, comporte un écran (25) sur lequel des images peuvent être visualisées sous forme stéréoscopique en utilisant un réseau de lentilles. Les items d'un menu qui permet la gestion de l'appareil peuvent alors apparaître en trois dimensions et par la manoeuvre d'une boule (20), il est possible de sélectionner un de ces items.

Application : appareils portables.

## Description

L'invention concerne un appareil comportant un écran sur lequel sont visibles des images stéréoscopiques.

L'invention peut trouver des applications importantes dans le domaine des appareils téléphoniques qui doivent présenter des caractéristiques attractives pour la dientèle et une bonne ergonomie pour naviguer, entre autres, dans les différents menus visualisés sur l'écran.

De tels appareils sont connus, on pourra à ce sujet consulter le document de brevet PCT publié sous le numéro WO9827516.

Bien que l'appareil décrit dans la référence ci-dessus donne satisfaction, il faut une certaine habitude et un certain apprentissage pour percevoir les images en relief ou en stéréoscopie.

L'invention propose un appareil du genre cité dans le préambule qui procure une grande qualité et une grande facilité de perception des images stéréoscopiques et permet une ergonomie dans la gestion des menus nettement améliorée par rapport aux écrans qui montrent des images en deux dimensions.

Pour cela, un tel appareil est remarquable en ce qu'il comporte des moyens de perception directe pour percevoir des image stéréoscopiques directement.

Les moyens de perception directe que l'on envisage peuvent être à titre d'exemple ceux décrits dans l'article :
〈〈 'Multiview 3D-LCD', Proc SPIE vol 2653 pp32-39 (1996) 〉〉. Ces moyens seront dénommés par la suite 〈〈 technique 3D-LCD 〉〉

Ce genre de moyen n'implique pas un apprentissage de visualisation, comme cela est décrit dans le document de brevet WO9827516 déjà cité.

En outre, ce genre de technique 3D-LCD, permet tant par sa conception mécanique et par ses besoins en énergie une implémentation relativement aisée dans les appareils portables, par exemple des appareils de téléphonie portable.

La description suivante, faite en regard des dessins ci-annexés, le tout donné à titre d'exemple non limitatif, fera bien comprendre comment l'invention peut être réalisée. Sur les dessins :
La figure 1 représente le schéma d'un appareil conforme à l'invention.
La figure 2 représente un premier exemple de mise en oeuvre de l'invention selon lequel les items d'un menu apparaissent à l'extérieur d'une sphère.
La figure 3 représente un deuxième exemple de mise en oeuvre de l'invention selon lequel les items d'un menu apparaissent à l'intérieur d'une sphère.
La figure 4 représente un troisième exemple de mise en oeuvre de l'invention selon lequel les items d'un menu apparaissent sur des plans séparés.

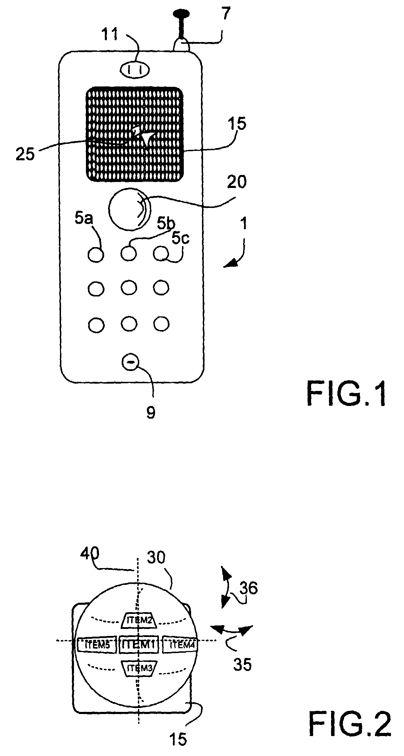

A la figure 1 la référence 1 indique un appareil de téléphonie conforme à l'invention. Cet appareil comporte de la manière usuelle un clavier formé de touches 5a, 5b, 5c,...etc...une antenne 7, un microphone 9, un écouteur 11 et un écran 15 qui permet de voir des images en stéréoscopie.

Cet écran est un écran comportant un réseau lenticulaire du genre cité dans l'article ci-dessus référencé, utilisant donc la technique dite technique 3D-LCD.

Ainsi, par l'invention, il est possible de visualiser des menus en relief sur l'écran. Pour pouvoir naviguer dans ces différent menus, on a prévu une boule de navigation 20. Cette boule permet de déplacer par exemple un curseur 25 dans les différent menus et un appui sur la boule permet de valider le menu sur lequel le curseur est positionné en appuyant dessus.

La figure 2 montre un premier exemple de réalisation d'un menu composé d'items qui sont disposés sur la surface extérieure d'une sphère 30 que l'écran 15 permet de visualiser. En manoeuvrant la boule de navigation 20, la sphère peut tourner horizontalement selon le sens de la flèche 35 ou verticalement selon le sens de la flèche 36. Evidemment en combinant ces mouvement la sphère peut tourner dans toutes les directions souhaitées par l'utilisateur. L'item qui est positionné au centre de l'écran par exemple à la croisée d'un réticule 40 plus ou moins visible est l'item sélectionné et par un appui sur la boule 20, cet item est validé.

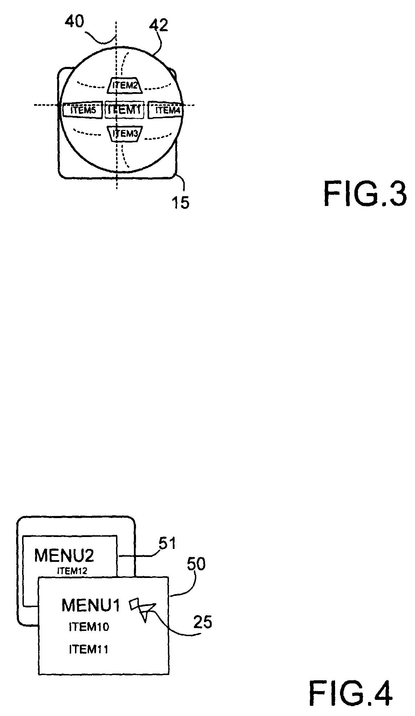

Au lieu d'être disposés sur la face extérieure d'une sphère les items peuvent aussi être disposés à l'intérieur d'une sphère 42. Ceci est montré à la figure 3. Pour montrer que la surface de la sphère est concave l'item central est entouré d'un trait plus fin. La sélection d'un item peut aussi s'effectuer de la même manière en utilisant le réticule 40.

La figure 4 montre une autre manière de profiter des images stéréoscopiques pour la gestion des menus.

Ici les différents items sont placés sur des menus se présentant sous forme de plans 50, 51,... que l'utilisateur peut mieux voir, soit en jouant sur la boule 20 soit, tout simplement, en déplaçant son regard. Pour sélectionner un item, on utilise le curseur 25. Les menus apparaissent alors en manoeuvrant la boule 20.

## Revendications

1. Appareil comportant un écran sur lequel sont visibles des images stéréoscopiques, caractérisé en ce qu'il comporte des moyens de perception directe pour percevoir des image stéréoscopiques directement.

2. Appareil selon la revendication 1 caractérisé en ce que ces moyens de perception directe sont constitués par un dispositif de la technique 3D-LCD.

3. Appareil selon la revendication 1 ou 2 dont l'écran est destiné, entre autres, à visualiser des items d'un menu, caractérisé en ce que des items du menu apparaissent en relief en trois dimensions.

4. Appareil selon l'une des revendications 1 ou 2 dont l'écran est destiné, entre autres à visualiser des items d'un menu caractérisé en ce que des items d'un menu apparaissent à l'extérieur d'une sphère.

5. Appareil selon l'une des revendications 1 à 4 dont l'écran est destiné, entre autres à visualiser des items d'un menu, caractérisé en ce que des items d'un menu apparaissent à l'intérieur d'une sphère.

6. Appareil selon l'une des revendications 1 à 5 dont l'écran est destiné, entre autres à visualiser des items d'un menu, caractérisé en ce que des items d'un menu apparaissent sur des plans séparés.

7. Appareil selon l'une des revendications 1 à 6, caractérisé en ce que les items d'un menu sont sélectionnés au moyen d'un curseur.

8. Appareil selon l'une des revendications 1 à 7, caractérisé en ce que les items d'un menus sont sélectionnés au moyen d'un réticule fixe alors que les items sont susceptibles de se déplacer dans l'espace défini par l'écran.
